# EUROPÄISCHE PATENTANMELDUNG

(11) **EP 1 338 563 A2**
(43) Veröffentlichungstag der Anmeldung: **27.08.2003**
(21) Anmeldenummer: 02026055.0
(22) Anmeldetag: 22.11.2002
(51) Int. Cl.: C01G 23/053, C09C 1/36

(54) **Titandioxidpartikel, Verfahren zur Herstellung von Titandioxidpartikeln sowie Verwendung von Titandioxidpartikeln**

(30) Priorität: 18.02.2002 DE 10206558
(71) Anmelder: Creavis Gesellschaft für Technologie und Innovation mbH, 45772 Marl (DE)
(72) Erfinder: Schmidt, Friedrich-Georg, Dr., 45721 Haltern am See (DE); Pawlik, Andreas, Dr., 45657 Recklinghausen (DE); Stützel, Bernhard, Dr., 45770 Marl (DE); Zimehl, Ralf, Dr., 47804 Krefeld (DE); Zorjanovic, Jovica, 24118 Kiel (DE)

(57) **Zusammenfassung**

Die Erfindung betrifft mikroporöse Titandioxidpartikel sowie ein Verfahren für die Herstellung von Titandioxidpartikeln. Die erfindungsgemäßen Titandioxidpartikel zeichnen sich durch eine Dichte von weniger als 1,9 g/cm³ aus und werden durch Hydrolyse von hydrolisierbaren Titanverbindungen wie z. B. Titantetraalkoxiden in unpolaren Dispersionsmitteln gewonnen. Das Verfahren zeichnet sich durch milde Bedingungen aus. Mit dem erfindungsgemäßen Verfahren können Titandioxidpartikel mit einer Partikel-Größe von 10 bis 600 nm hergestellt werden.

Die erfindungsgemäßen Titandioxidpartikel können insbesondere als Bestandteile in Beschichtungsmitteln, Solarzellen, Batterien, Lebensmitteln, Kosmetika oder Pharmazeutika eingesetzt werden.

## Beschreibung

Gegenstand der vorliegenden Erfindung sind mikroporöse Titandioxidpartikel, ein Verfahren für die Herstellung von Titandioxidpartikeln sowie die Verwendung von erfindungsgemäßen Titandioxidpartikeln.

Titandioxid hat für viele industrielle Anwendungen außerordentliche Bedeutung. Durch die hohe Brechzahl des Titandioxids und dem damit verbundenen hohen Lichtstreuvermögen sowie seine photokatalytische Stabilität ist Titandioxid zu einem unentbehrlichen Bestandteil vieler Beschichtungsstoffe geworden. Unter Berücksichtigung spezieller Reinheitskriterien wird Titandioxid auch als Farb- und Bindemittel in Lebensmitteln, Kosmetika und Pharmazeutika verwendet.

Die Herstellung von Titandioxidpartikeln in einem gewünschtem Dispersionsmittel mit kontrollierbaren Eigenschaften wie Teilchengrößen, Teilchengrößenverteilung und definierter Porosität spielt eine wichtige Rolle, insbesondere bei der gezielten Oberflächenmodifizierung [N. J. Marston, B. Vincent, N. G. Wright, Progr Colloi Polym Sci 1998, 109, 278 - 282] oder für den Einsatz in neuartigen Solarzellen [B. O'Regan, M. Grätzel, Nature 1991, 353, 737].

Zur Herstellung von Titandioxid haben sich in der Technik Sulfat- (aus Ilmenit, FeTiO₃) und Chlorid-Verfahren (Oxidation von TiCl₄) durchgesetzt. Hochdisperses, sehr reines Titandioxid erhält man durch Flammenhydrolyse von TiCl₄. Durch diese Verfahren werden aber Titandioxidteilchen in einer sehr breiten Größenverteilungen erhalten. Für viele der genannten Anwendungen spielt die Einheitlichkeit und Größe der Titandioxidteilchen aber eine wesentliche Rolle. Aus diesem Grund wurden Methoden zur Herstellung von Titandioxiddispersionen mit einheitlichen Teilchengrößen entwickelt.

Die üblichen hydrolytischen Verfahren zur Herstellung von Übergangsmetalloxiden gehen von den entsprechenden Übergangsmetallalkoholaten aus. Barringer [Barringer EA, Bowen HK, Fegley B, Commun Ceramics Soc. 1984, C113] [Barringer EA, Bowen HK, Langmuir. 1985, 1, 414] [Barringer EA, Bowen HK, Langmuir. 1985, 1: 420] beschreibt die Hydrolyse des Titantetraethanolats und Titantetraisopropylats in Ethanol zu Anatasteilchen. Dieses Verfahren wurde einige Jahre später von Vincent [N. J. Marston, B. Vincent, N. G. Wright, Progr Colloi Polym Sci. 1998, 109, 278 - 282] modifiziert. Anders als Barringer verwendete Vincent aber zur Hydrolyse Salzsäure als Katalysator und kontrollierte sorgfältig den Wassergehalt des Mediums. Vincent erhielt Titandioxidpartikel in hoch kristalliner Rutil-Modifikation, allerdings mit einem Verfahren, das in größerem Maßstab nur sehr schwer anwendbar ist. Weitere Möglichkeiten wurden von Mingmei Wu, Junbiao Long, Aihong Huang, Yuji Luo, Langmuir. 1999, 15, 8822 - 8825; Claus Feldmann und Hans-Otto Jungk, Angew. Chem. 2001, 113, Nr. 2; Hiroshi Kominami, Masaaki Kohno and Yoshiya Kera, J. Mater. Chem., 2000, 10 1151 - 1156; A. Zaban, S. T. Aruna, S. Tirosh, B. A. Gregg, Y. Mastai, J. Phys. Chem. B. 2000, 104, 4130 - 4133; Chen-Chi Wang and Jackie Y. Ying. Chem. Mater. 1999, 11, 3113 - 3120 beschrieben. Die Umwandlung zur Rutil-Modifikation erfolgt üblicherweise durch Kalzinierung bei 800 - 1100 °C. In neuerer Zeit [Jinsoo Kim, Ki-Chang Song, Oliver Wilhelm und Sotiris E. Pratsinis, Chemie Ingenieur Technik (73) 5 2001, 401ff] gelingt die Herstellung von Titandioxidpartikeln in der Anatas-Struktur mit kleinen Anteilen der Rutil-Struktur bereits durch Kalzinieren bei 450 °C, wobei ein peptisiertes Titandioxid eingesetzt wird. Amorphe Titandioxidpartikeln mit sehr geringen Anteilen der Anatas-Struktur werden bereits bei 100 °C erhalten. Die Herstellung von Titandioxidpartikeln mit Rutil-Struktur erfordert immer noch eine Behandlung der Titandioxidpartikel bei Temperaturen oberhalb von 450 °C.

Aufgabe der vorliegenden Erfindung war es deshalb ein Verfahren zur Herstellung von Titandioxidpartikeln mit Rutil-Struktur oder Anatas-Struktur, insbesondere mit Rutil-Struktur zur Verfügung zu stellen, mit welchem die Herstellung dieser Partikel bei milden Bedingungen, insbesondere bei Temperaturen unter 450 °C gelingt.

Überraschenderweise wurde gefunden, das sich Titandioxidpartikel mit Rutil-Struktur sehr einfach mit einem Verfahren herstellen lassen, welches die Teilschritte
a) Hydrolyse von hydrolisierbaren Titanverbindungen, wie z. B. Titanalkoxiden zu amorphen Titandioxidteilchen in Gegenwart von Wasser, Alkohol und einem unpolaren Dispersionsmittel,
b) Umwandlung der amorphen Titandioxidpartikel in kristalline Titandioxidpartikel bei einer Temperatur kleiner 450 °C und einem Druck von 0 bis 150 bar und
c) Behandlung des unter b) erhaltenen Reaktionsgemisches zur zumindest teilweisen Abtrennung der im Reaktionsgemisch vorhandenen Verbindungen von den Titandioxidpartikeln
umfasst. Mittels dieses Verfahrens lassen sich insbesondere kristalline, mikroporöse Titandioxidpartikel herstellen, die eine geringe apparente Dichte aufweisen.

Gegenstand der vorliegenden Erfindung sind deshalb Titandioxidpartikel mit kristalliner Struktur, welche dadurch gekennzeichnet sind, dass die Partikel eine apparente Dichte kleiner 1,9 g/cm³ aufweisen.

Ebenfalls Gegenstand der vorliegenden Erfindung ein Verfahren zur Herstellung von kristallinen Titandioxidpartikeln, insbesondere von erfindungsgemäßen Titandioxidpartikeln, welches dadurch gekennzeichnet ist, dass es die Schritte
a) Hydrolyse von hydrolisierbaren Titanverbindungen zu amorphen Titandioxidteilchen in Gegenwart von Wasser, Alkohol und einem unpolaren Dispersionsmittel,
b) Umwandlung der amorphen Titandioxidpartikel in kristalline Titandioxidpartikel bei einer Temperatur kleiner 450 °C und einem Druck von 0 bis 150 bar und
c) Behandlung des unter b) erhaltenen Reaktionsgemisches zur zumindest teilweisen Abtrennung der im Reaktionsgemisch vorhandenen Verbindungen von den Titandioxidpartikeln
aufweist.

Außerdem ist Gegenstand der vorliegenden Erfindung eine Verwendung von erfindungsgemäßen Titandioxidpartikeln als Bestandteil in Beschichtungsmitteln, Solarzellen, Batterien, Lebensmitteln, Kosmetika, Pharmazeutika.

Ebenso sind Gegenstand der vorliegenden Erfindung Solarzellen und Beschichtungsmittel, die erfindungsgemäße Titandioxidpartikel aufweisen.

Wegen ihrer geringen apparenten Dichte von kleiner 1,9 g/cm³ lassen sich die erfindungsgemäßen Titandioxidpartikel auf einfache Weise in den verschiedensten Medien dispergieren, ohne dass ein schnelles Absetzen der Partikel festgestellt werden kann. Dies ist insbesondere für den Einsatz der Partikel in Beschichtungsmitteln interessant, da diese auf Grund der guten Dispersionseigenschaften und geringeren Sedimentationsneigung der Partikel eine längere Verarbeitungszeit aufweisen als herkömmliche Beschichtungsmittel wie z. B. Farben oder Lacke, die schon nach kurzer Zeit neu aufgerührt werden müssen, um eine homogene Verteilung der Partikel zu gewährleisten. Auch bei der Verwendung als Pigmentpartikel in z. B. auf elektrophoretischer Basis arbeitenden Displaysystemen können die Partikel mit geringerer Dichte vorteilhaft eingesetzt werden.

Das erfindungsgemäße Verfahren hat den Vorteil, dass die Synthese der Titandioxidpartikel bei milden Bedingungen, insbesondere bei niedriger Temperatur durchgeführt werden kann und trotz der niedrigen Temperatur die erhaltenen Titandioxidpartikel die Rutil-Struktur aufweisen. Da das Verfahren außerdem als Eintopfverfahren durchgeführt werden kann, stellt das erfindungsgemäße Verfahren ein einfaches Verfahren zur Herstellung von kristallinen Titandioxidpartikeln dar.

Mit dem erfindungsgemäßen Verfahren ist es einfach möglich die Eigenschaften wie Teilchengrößen, Teilchengrößenverteilung und Porosität der Titandioxidteilchen unter milden Bedingungen gezielt einzustellen.

Die Titandioxidpartikeln mit Teilchengrößen im Bereich von 50 bis 600 nm können bei milden Temperaturen von kleiner 200 °C hergestellt werden und liegen je nach Reaktionsbedingungen in der Rutil- oder Anatas-Modifikation vor. Dadurch besteht auch die Möglichkeit zur Herstellung von Kompositmaterialien auf Basis von Rutilpartikeln im gewünschten Dispersionsmittel bzw. in einem polymerisierbaren Monomer durch eine Eintopfreaktion.

Die erfindungsgemäßen Titandioxidpartikel sowie das erfindungsgemäße Verfahren zur Herstellung von Titandioxidpartikeln wird nachfolgend beschrieben, ohne dass die Erfindung auf die beschriebenen Ausführungsarten beschränkt sein soll.

Die erfindungsgemäßen Titandioxidpartikel mit kristalliner Struktur zeichnen sich dadurch aus, dass die Partikel eine apparente Dichte kleiner 1,9 g/cm³, vorzugsweise eine Dichte von 1,50 bis 1,85 g/cm³ und ganz besonders bevorzugt eine Dichte von 1,70 bis 1,80 g/cm³ aufweisen. Wird die Dichte durch eine schnelle Oszillation der Partikel bestimmt, wird als Dichte eine scheinbare (apparente) Dichte gemessen, die sich aus den einzelnen Dichten je nach Volumenbruch zusammensetzt (ρₐₚₚ = φ₁ρ₁ + φ₂ρ₂). So können Teilchen z. B. eine Matrix mit der Dichte ρ₁ und zugängliche aber insbesondere auch unzugängliche Poren mit einer Dichte ρ₂ aufweisen. Die Summe der Dichten entsprechend der Molenbrüche ergibt die apparente Dichte.

Die Titandioxidpartikel können die Anatas- oder Rutil-Struktur aufweisen. Vorzugsweise weisen die erfindungsgemäßen Titandioxidpartikel Titandioxid in der Rutil-Struktur auf. Die erfindungsgemäßen Titandioxidpartikel weisen vorzugsweise eine Teilchengröße von 50 bis 600 nm auf. Besonders bevorzugt weisen die Titandioxidpartikel eine Teilchengröße von 50 bis 400 nm, ganz besonders bevorzugt von 75 bis 200 nm auf.

Die erfindungsgemäßen Titandioxidpartikel weisen vorzugsweise eine spezifische Oberfläche von 30 m²/g bis 250 m²/g, besonders bevorzugt von 50 bis 120 m²/g auf.

Die erfindungsgemäßen mikroporösen Titandioxidpartikel werden bevorzugt mittels des nachfolgend beschriebenen Verfahrens hergestellt.

Das erfindungsgemäße Verfahren zur Herstellung von kristallinen Titandioxidpartikeln, insbesondere von erfindungsgemäßen mikroporösen Titandioxidpartikeln zeichnet sich dadurch aus, dass es die Schritte
a) Hydrolyse von hydrolisierbaren Titanverbindungen zu amorphen Titandioxidteilchen in Gegenwart von Wasser, Alkohol und einem unpolaren Dispersionsmittel,
b) Umwandlung der amorphen Titandioxidpartikel in kristalline Titandioxidpartikel bei einer Temperatur kleiner 450 °C, vorzugsweise von 5 bis 300 °C und ganz besonders bevorzugt bei 5 bis 200 °C und einem Druck von 0 bis 150 bar und
c) Behandlung des unter b) erhaltenen Reaktionsgemisches zur zumindest teilweisen Abtrennung der im Reaktionsgemisch vorhandenen Verbindungen von den Titandioxidpartikeln
umfasst.

In Teilschritt a) wird durch Hydrolyse von hydrolisierbaren Titanverbindungen zunächst amorphes Titandioxid gebildet. Der Mechanismus der Hydrolyse von Übergangsmetalloxiden ist sehr komplex und lässt sich nach derzeitigem Wissen nur spekulativ formulieren [N. Steunou, G. Kickelbig, K. Boubekeur and C. Sanchez, J. Chem. Soc. Dalton. Trans. 1999, 3653 - 3655.] [F. Sobott, S. A. Schunk, F. Schüth and B. Brutschy, Chem. Eur. J. 1998, 4 No. 11]. Die Hydrolysereaktion und die Bildung von Titandioxidteilchen z. B. aus Titanalkoxiden kann man sich wie folgt vorstellen: Vermutlich werden einige Alkoxygruppen der Titansäureester hydrolysiert, so dass sich die Titansäureester über Sauerstoffbrückenbindungen zu Oligomeren in einer ungeordneten Struktur verbinden. Indem weitere Alkoxygruppen hydrolysiert werden, bildet sich zunächst ein Partikelembryo, der sich weiter zu einem kugelförmigen und porösen Titandioxidteilchen entwickelt.

Als hydrolisierbare Titanverbindung kann zumindest eine Verbindung der Formel TiXₘY₄₋ₘ eingesetzt werden, mit X = Cl, Br, J und Y = OR mit R = substituierter oder unsubstituierter, linearer oder verzweigter Kohlenwasserstoff mit 1 bis 9 C-Atomen und m = 0, 1, 2, 3 oder 4. Vorzugsweise werden als hydrolisierbare Titanverbindungen Verbindungen ausgewählt aus Titanchlorid, Titanisopropylat, Titantetraethoxylat und Titantetrapropylat eingesetzt. Es können aber auch Verbindungen der obigen Formel mit m = 2 eingesetzt werden, wie z. B. TiCl₂(OC₃H₇)₂.

Die Hydrolyse der hydrolisierbaren Titanverbindung wird bevorzugt durch Zutropfen einer Mischung aus unpolarem Dispersionsmittel, Alkohol und Wasser, vorzugsweise bei Raumtemperatur eingeleitet. In der Reaktionsmischung wird die hydrolisierbare Titanverbindung durch das Wasser hydrolysiert. Der Alkohol dient hier als Lösungsvermittler. Durch diese Reaktion entstehen überwiegend kugelförmige, amorphe Titandioxidteilchen.

Der als Lösungsvermittler eingesetzte Alkohol muss sich sowohl mit dem unpolaren Dispersionsmittel als auch mit dem Wasser gut mischen lassen, um eine Phasentrennung des bei der Hydrolyse zugetropften Gemisches zu vermeiden.

Bei dem erfindungsgemäßen Verfahren wird die Hydrolyse, Teilschritt a) deshalb vorzugsweise in Gegenwart eines Alkohols, der von 2 bis 9 Kohlenstoffatome, vorzugsweise von 3 bis 5 Kohlenstoffatome aufweist, durchgeführt. Es kann vorteilhaft sein, wenn zur Hydrolyse ein Gemisch, welches Wasser, einen Alkohol, vorzugsweise einen 2 bis 9, insbesondere 3 bis 5 Kohlenstoffatome aufweisenden Alkohol und ein unpolares Dispersionsmittel aufweist, eingesetzt wird. Als Alkohole, in deren Gegenwart die Hydrolyse durchgeführt wird, eignen sich insbesondere Ethanol, 1-Propanol, 2-Propanol, 1-Butanol, 2-Butanol, 1-Pentanol, 2-Pentanol 3-Pentanol, 2-Ethylhexanol, Isononanol und/oder tert.-Butanol oder Mischungen davon. Insbesondere bei der Verwendung von Alkoholen mit 3 bis 5 Kohlenstoffatomen werden bei dem erfindungsgemäßen Verfahren Titandioxidpartikel mit Rutil-Struktur erhalten. Bei der Verwendung von Ethanol im bei der Hydrolyse eingesetzten Gemisch entstehen unter den nachfolgend beschriebenen Reaktionsbedingungen Titandioxidpartikel mit Anatas-Struktur.

Der Einfluss der Alkohole als Lösungsvermittler auf die unterschiedliche Kristallinität der erhaltenen Titandioxide lässt sich mit einem einfachen Modell beschreiben. In einem Gemisch aus unpolarem und polarem (Alkohol) Dispersionsmittel wird angenommen, dass sich die Teilchen nur dort bilden, wo ausreichend Wasser zur Hydrolyse des Titansäureesters vorhanden ist, nämlich im polaren Anteil des Reaktionsgemisches. Die Titandioxidteilchen bilden sich also dort, wo Alkoholmoleküle vorhanden sind und dies hat zur Folge, dass auch in den Teilchen Alkoholmoleküle eingeschlossen werden. Die in den amorphen Teilchen eingeschlossene Alkoholmoleküle werden im Teilschritt b) des Verfahrens zum Teil unter Druck herausgesprengt, wodurch die offenen Poren in den Teilchen entstehen.

Die in dem erfindungsgemäßen Verfahren eingesetzte hydrolisierbare Titanverbindung wird vor Beginn der Hydrolyse in einem unpolaren Dispersionsmittel gelöst. Wird der vorgelegten Titanverbindung zur Hydrolyse ein Gemisch zugefügt, welches ebenfalls ein Dispersionsmittel enthält, so ist es vorteilhaft, wenn jeweils das gleiche Dispersionsmittel verwendet wird. Als unpolare Dispersionsmittel können eine oder mehrere aliphatische, aromatische und/oder cycloaliphatische Verbindungen, ausgewählt aus einer oder mehrerer Verbindungen der folgenden Gruppen
I) aliphatische verzweigte und oder unverzeigte Kohlenwasserstoffe CₙH₂ₙ₊₂ mit n > 4,
II) cycloaliphatische verzweigte oder unverzeigte Kohlenwasserstoffe CₙH₂ₙ mit n > 5,
III) aromatische Kohlenwasserstoffe CₙHₙ mit n > 6, mit oder ohne Halogen- und/oder Alkylsubstituenten, oder Gemische dieser Verbindungen eingesetzt werden.
Besonders bevorzugt werden Isoparaffin-Gemische als unpolares Dispersionsmittel eingesetzt. Es kann auch vorteilhaft sein, als Dispersionsmittel Verbindungen einzusetzen, die sich polymerisieren lassen. Solche Verbindungen bzw. Monomeren sind z. B. Styrol, (Meth)acrylate-Monomere, (cyclische) Olefine etc.. Bei dieser Verfahrensvariante kann eine Dispersion aus Titandioxidpartikeln und Monomeren erhalten werden, die dann direkt zur Herstellung der entsprechenden Polymeren eingesetzt werden kann, mit dem Vorteil, dass die Titandioxidpartikel möglichst gleichmäßig in dem Polymeren verteilt sind.

In dem erfindungsgemäßen Teilschritt b) wird bei erhöhter Temperatur kleiner 450, vorzugsweise bei einer Temperatur von 5 bis 300 °C, besonders bevorzugt bei 5 bis 200 °C und ganz besonders bevorzugt bei 80 bis 200 °C und einem Druck von bevorzugt kleiner 15 bar das durch Hydrolyse in Teilschritt a) erhaltene amorphe Material in kristallines Titandioxid umgewandelt. Bei Teilschritt b) kann zur gesteuerten Beschleunigung der Reaktion und/oder Morphologieänderung der Partikel ein Temperaturgradient eingesetzt werden.

Es kann vorteilhaft sein, wenn die Umwandlung gemäß Teilschritt b) in Gegenwart eines sauren Katalysators erfolgt. Als saure Katalysatoren können in Teilschritt b) z. B. mineralische Säuren, wie z. B. Salzsäure oder organische Säuren, wie z. B. Ameisensäure, Essigsäure, Propionsäure, Hydroxybenzoesäure, Laurinsäure und Zitronensäure eingesetzt werden. Ganz besonders bevorzugt wird als saurer Katalysator in Teilschritt b) Salzsäure eingesetzt. Es kann vorteilhaft sein, wenn die Konzentration des sauren Katalysators in der Reaktionsmischung zu Beginn des Teilschrittes b) von 0 bis 60 mmol/l, vorzugsweise von 20 bis 50 mmol/l beträgt. Der Teilschritt b) kann aber auch in Gegenwart eines basischen Katalysators erfolgen.

Der Teilschritt b) des erfindungsgemäßen Verfahrens wird besonders bevorzugt bei einem Druck von 0,1 bis 15 bar, besonders bevorzugt bei einem Druck von kleiner 1 bar durchgeführt. Die Reaktionsmischung in Teilschritt b) des erfindungsgemäßen Verfahrens wird vorzugsweise über die gesamte Reaktionsdauer gerührt. Als Apparatur zum Rühren können die allgemein bekannten Apparaturen eingesetzt werden. Vorzugsweise wird der Teilschritt b) in einem Autoklaven, der eine Rührapparatur aufweist, durchgeführt.

Je nach als Lösungsvermittler eingesetztem Alkohol können beim Erhitzen im Teilschritt b) unterschiedliche Porenstrukturen in den Titandioxidpartikeln, insbesondere in den Rutilpartikeln gebildet werden. Bei der Untersuchung der erfindungsgemäß hergestellten Titandioxidpartikel wurden Stickstoffabsorptionsisothermen erhalten, deren Form typisch ist für mikroporöse Teilchen, also Teilchen mit einer Porengrößen von kleiner/gleich 2 nm.

Die apparente Dichte der mit dem erfindungsgemäßen Verfahren hergestellten Titandioxidteilchen, insbesondere der Titandioxidteilchen mit Rutil-Struktur beträgt vorzugsweise weniger als 1,9 g/cm³, besonders bevorzugt im bereich von 1,65 bis 1,87 g/cm³. Im Vergleich zur Dichte von käuflichem Titandioxid, wie z. B. Bayertitan (4,22 g/cm³), die wie die Dichtebestimmungen der erfindungsgemäßen in Wasser redispergierten Partikel mittels Oszillator-Dichtemessungen bestimmt wurde, weisen die erfindungsgemäß hergestellten Titandioxidteilchen bevorzugt eine sehr viel geringere apparente Dichte auf.

Nach der Behandlung in Teilschritt b) sind die Titandioxidpartikel mit Rutil-Struktur um 10 bis 15 % kleiner als die ursprünglichen amorphen Teilchen aus Teilschritt a). Vermutlich diffundieren die Alkoholmoleküle in Teilschritt b) aus den Teilchen beim Erreichen des Siedepunktes des Alkohols heraus. Die Poren, die die Alkoholmoleküle dabei hinterlassen, sind am Anfang recht groß. Mit steigender Temperatur nimmt auch der Druck im geschlossenen System zu. Mit steigendem Druck und Temperatur sintern die Poren im Verlauf der Reaktion zusammen. Die Durchführung des Teilschrittes b) bei höherem Druck und erhöhter Temperatur führt deshalb zu kleineren Poren bzw. umgekehrt. Auf diese Weise lassen sich die Porengrößen der mit dem erfindungsgemäßen Verfahren hergestellten Titandioxidpartikel einstellen.

Das erfindungsgemäße Verfahren wird vorzugsweise so durchgeführt, dass der Teilschritt b) mit einer Reaktionszeit von 10 min (100 ― 200 °C) bis 200 Stunden durchgeführt wird. Je nach verwendeter Temperatur im Teilschritt b) muss die Reaktionsdauer variiert werden. Auf diese Weise ist auch bei diesen Temperaturen die Herstellung von Titandioxidpartikeln mit Rutil-Struktur direkt möglich.

Der Teilschritt c) des erfindungsgemäßen Verfahrens dient der Aufarbeitung des Reaktionsgemisches. Vorzugsweise umfasst der Teilschritt c) zumindest eine thermische Behandlung der Reaktionsmischung, bei welcher flüchtige Teile der Reaktionsmischung, vorzugsweise zumindest Wasser, saurer Katalysator, Dispersionsmittel und/oder Alkohol abdestilliert werden. Der Alkohol kann sowohl jener sein, der mit dem Hydrolysegemisch in das Reaktionsgemisch eingetragen wurde, als auch jener, der bei der Hydrolyse des Titanalkoxids entstanden ist. Es kann vorteilhaft sein, wenn die thermische Behandlung bei einem Unterdruck durchgeführt wird. Auf diese Weise gelingt die Abtrennung auch bei sehr milden Temperaturen und es kann so vermieden werden, dass sich Titandioxidpartikel mit Anatas-Struktur in die Rutil-Struktur umwandeln.

Es kann vorteilhaft sein, wenn ein Teil der in dem Reaktionsgemisch vorhandenen Flüssigkeiten nicht von den Titandioxidpartikeln abgetrennt werden. Solche Dispersionen lassen sich z. B. direkt einsetzen, wenn die verbleibende Flüssigkeit z. B. ein Monomer einer polymerisierbaren Verbindung ist.

Die erfindungsgemäßen Titandioxidpartikel können in allen Anwendungen eingesetzt werden, in denen die bisher bekannten Titandioxidpartikel eingesetzt werden. Besonders bevorzugt werden die erfindungsgemäßen Titandioxidpartikel bzw. Titandioxidpartikel, die durch das erfindungsgemäße Verfahren hergestellt werden, als Bestandteil in Beschichtungsmitteln, Solarzellen, Batterien, Lebensmitteln, Kosmetika oder Pharmazeutika verwendet.

Insbesondere Solarzellen und Beschichtungsmittel, die dadurch gekennzeichnet sind, dass sie erfindungsgemäße Titandioxidpartikel aufweisen, sind Gegenstand der vorliegenden Erfindung. In farbstoff-sensibilisierten Solarzellen werden Titandioxidpartikel als Halbleitermaterialien eingesetzt. Diese Partikel müssen von Elektrolyten umgeben sein, um eine elektrische Leitung innerhalb der Solarzelle zu ermöglichen. Die erfindungsgemäßen Titandioxidpartikel haben den Vorteil, dass sie sich auf Grund ihrer Dichte und Porosität sehr gut in dem Auftragsmedium einmischen lassen, und gleichzeitig keine Oberflächenaktivierung zur Anlagerung von Farbstoffen mehr benötigen. In Beschichtungsmitteln, wie z. B. Farben oder Lacken wird durch die Eigenschaften der erfmdungsgemäßen Partikel eine bessere Verteilung dieser Partikel erzielt. Die Titandioxidpartikel können in den Beschichtungsmitteln z. B. die Funktion von Pigmenten, insbesondere von Weißpigmenten übernehmen.

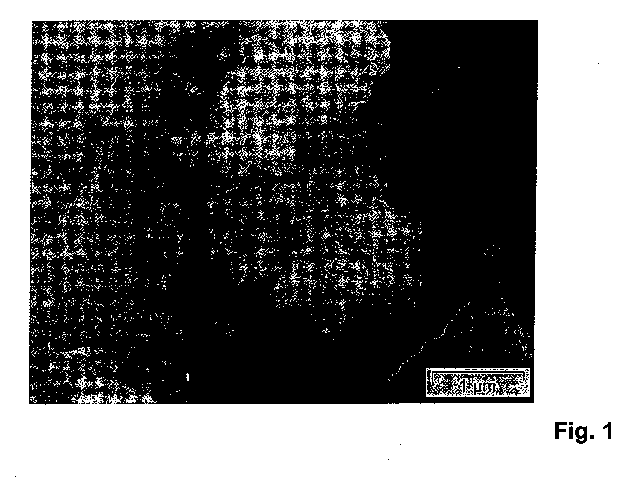

Die Figuren Fig. 1 bis Fig. 3 sollen die Erfindung näher erläutern, ohne deren Schutzumfang einzuschränken.

In Fig. 1 ist eine rasterelektronenmikroskopische Aufnahme von Rutilteilchen die gemäß Beispiel 1 erhalten wurden dargestellt.

Fig. 2 gibt die Pulverdiffraktogramme der gemäß den Beispielen 1 bis 4 erhaltenen Titandioxidpartikel (Intensität gegen den Beugungswinkel 2 Theta) wieder. Es zeigt sich, dass die Partikel in der Rutil-Struktur vorliegen.

Fig. 3 gibt das Pulverdiffraktogramm der gemäß dem Beispiel 5 erhaltenen Titandioxidpartikel wieder. Es ist zu erkennen, dass Partikel in der Anatas-Struktur vorliegen.

Die nachfolgenden Beispiele sollen die Erfindung näher erläutern, ohne ihren Schutzumfang einzuschränken.

### Beispiel 1:

In einem Teflonbecher wurden 38 ml Isopar H (CALDIC Deutschland GmbH & Co) und 2 ml Titanisopropylat (> 98 %: Merck) vorgelegt und 10 Minuten gerührt. Eine Mischung aus 20 ml Isopar H, 1 ml Wasser und 19 ml 2-Propanol (p. a.: Merck) wurde durch einen Trichter in einem Guss bei 25 °C zugegeben. Innerhalb weniger Sekunden bildeten sich weiße, amorphe Titandioxidteilchen. Die Mischung wurde weiter 10 Minuten gerührt und mit 0,4 ml konz. Salzsäure (37 %, p. a.: Merck) versetzt. Der Becher wurde dann in den Autoklav eingesetzt, dicht verschlossen und 48 Stunden bei 200 °C erhitzt. Anschließend wurde die Reaktionsmischung am Rotationsverdampfer destilliert, wobei 2-Propanol, Salzsäure und das restliche Wasser abgetrennt wurden. Im Reaktionsgefäß blieben nur in Isopar H dispergierte Titandioxidteilchen zurück.

Pulverdiffraktogramme wurden mit einem Röntgen-Diffraktometer Typ Siemens D5000 (Cu-Röhre; Kα₁-Strahlung = 1,54051 Å; Reflexion) aufgenommen. Die rasterelektronenmikroskopische Aufnahme wurde mit einem Rasterelektronenmikroskop Typ XL 30 ESEM von Philips erhalten. Die Messung der Dichten erfolgte mit einem Dichtemesser DMA 45 der Fa. Anton Paar (Bestimmung der Volumendichte aus der Messung der Schwingungsdauer) mit in Wasser redispergierten Partikeln. Die Bestimmung der spezifischen Oberfläche wurden an einer von W. Ewald [W. Ewald, Dissertation, Universität Kiel, 1995] gebauten Gasadsorptionsapparatur mit N₂ als Adsorbant durchgeführt. Die Auswertung der Gasadsorptionsisothermen erfolgte auf der Grundlage des Zylinderporenmodells [E. P. Barrett, L. G. Joyner, P. P. Halenda, J. Amer. Chem. Soc. 1951, 73, 373 - 380] nach der BET-Methode [S. Brunauer, L. S. Deming, W. S. Deming, E. Teller, J. Amer. Chem. Soc. 1940, 73, 1723 - 1732]. Die erhaltenen Messwerte sind in Tabelle 1 angegeben.

### Beispiel 2:

Der Versuch aus Beispiel 1 wurde wiederholt. Statt 2-Propanol wurden 2 ml 2-Butanol (p. a.: Merck) eingesetzt.

### Beispiel 3:

Der Versuch aus Beispiel 1 wurde wiederholt. Statt 2-Propanol wurden 2 ml tert.-Butanol (p. a.: Merck) eingesetzt.

### Beispiel 4:

Der Versuch aus Beispiel 1 wurde wiederholt. Statt 2-Propanol wurden 2 ml 2-Pentanol (p.a.: Merck) eingesetzt.

### Beispiel 5:

Der Versuch aus Beispiel 1 wurde wiederholt. Statt 2-Propanol wurden 2 ml Ethanol (p. a.: Merck) eingesetzt.

### Beispiel 6 (Vergleichsprobe):

Es wurden Titandioxidpartikel Bayertitan R-D der Firma Bayer entsprechend dem Versuch aus Beispiel 1 untersucht.

**Tabelle 1:**

| Ergebnisse der Titandioxidteilchenherstellung mit verschiedenen Alkoholen als Wasserschlepper gemäß der Beispiel 1 bis 6 | | | | |
|---|---|---|---|---|
| Beispiel | Wasserschlepper | Modifikation | Spez. Ober. [m²/g] | Dichte [g/cm³] |
| 1 | 2-Propanol | Rutil | 37,5 | 1,74 |
| 2 | 2-Butanol | Rutil | 48,6 | 1,69 |
| 3 | tert.-Butanol | Rutil | 8,7 | 1,87 |
| 4 | 2-Pentanol | Rutil | 44,3 | 1,68 |
| 5 | Ethanol | Anatas | 116,7 | 1,56 |
| 6 | Bayertitan | Rutil | 24 | 4,22 |

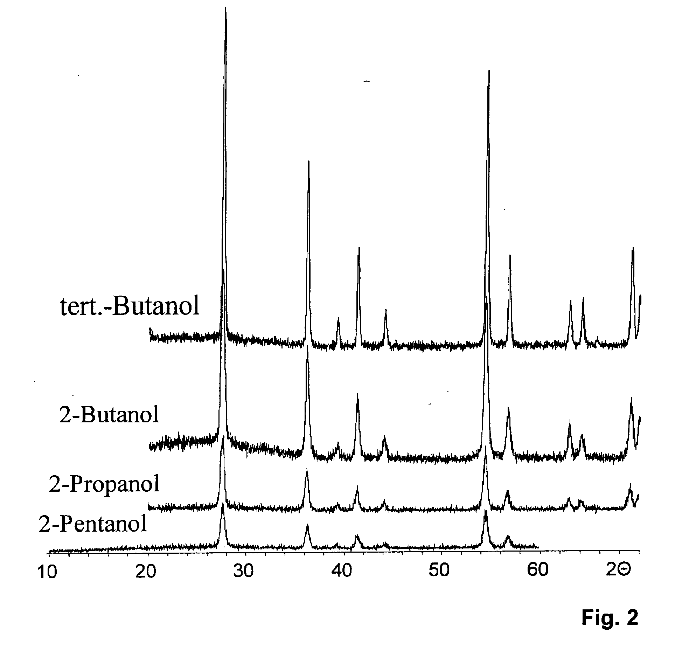

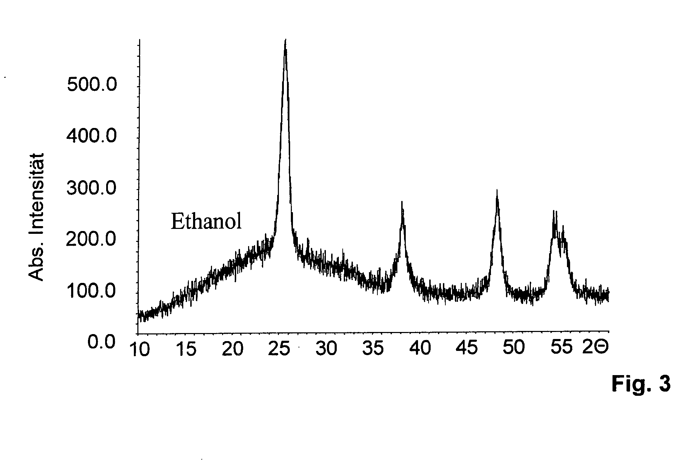

Aus der Tabelle und den Pulverdiffraktogrammen (Fig. 2) kann entnommen werden, dass sich mit allen eingesetzten Alkoholen als Lösungsvermittler mit Ausnahme von Ethanol kristallines Titandioxid in der Rutil-Modifikation bildet. Die Röntgenuntersuchungen deuten auf das Vorliegen des Titandioxids in mikrokristalliner Form (Fig. 2 und 3) hin. Mit Ethanol als Lösungsvermittler bildete sich Anatas (Fig. 3). Der Grund dafür liegt vermutlich in einer Phasentrennung während des Heizens, wobei amorphes Titandioxid nur zu Anatas und nicht zu Rutil umgewandelt wird.

### Beispiel 7:

Der Versuch aus Beispiel 1 wurde mehrfach wiederholt. Es wurden die Reaktionstemperaturen in Teilschritt b) in 5 °Celsius-Schritten im Bereich von 100 bis 200 °C variiert. Diese Versuche wurden einmal mit einer Reaktionsdauer von 48 Stunden und einmal mit einer Reaktionsdauer von 96 Stunden durchgeführt. Die erhaltenen Titandioxidpartikel wurden analysiert.

Bei den genannten Reaktionszeiten von 48 und 96 Stunden, entsteht ab 110 °C Rutil. Von 100 bis 110 °C entsteht ein Gemisch aus Anatas und Rutil. Mit zunehmender Reaktionszeit und Temperatur steigt die Kristallinität des Titandioxids, die spezifische Oberfläche der Teilchen nimmt hingegen ab.

## Patentansprüche

1. Mikroporöse Titandioxidpartikel mit kristalliner Struktur,
**dadurch gekennzeichnet,**
**dass** die Partikel eine apparente Dichte kleiner 1,9 g/cm³ aufweisen.

2. Titandioxidpartikel gemäß Anspruch 1,
**dadurch gekennzeichnet,**
**dass** die Partikel eine apparente Dichte von 1,50 bis 1,85 g/cm³ aufweisen.

3. Titandioxidpartikel gemäß Anspruch 1 oder 2,
**dadurch gekennzeichnet,**
**dass** das Titandioxid in der Rutil-Struktur vorliegt.

4. Mikroporöse Titandioxidpartikel gemäß Anspruch 1 oder 2,
**dadurch gekennzeichnet,**
**dass** das Titandioxid in der Anatas-Struktur vorliegt.

5. Titandioxidpartikel gemäß zumindest einem der Ansprüche 1 bis 4,
**dadurch gekennzeichnet,**
**dass** die Partikel eine Teilchengröße von 10 bis 600 nm aufweisen.

6. Titandioxidpartikel gemäß zumindest einem der Ansprüche 1 bis 5,
**dadurch gekennzeichnet,**
**dass** die Partikel eine spezifische Oberfläche im Bereich von 30 bis 250 m²/g aufweisen.

7. Verfahren zur Herstellung von kristallinen Titandioxidpartikeln,
**dadurch gekennzeichnet,**
**dass** es die Schritte
a) Hydrolyse von hydrolisierbaren Titanverbindungen zu amorphen Titandioxidteilchen in Gegenwart von Wasser, Alkohol und einem unpolaren Dispersionsmittel,
b) Umwandlung der amorphen Titandioxidpartikel in kristalline Titandioxidpartikel bei einer Temperatur kleiner 450 °C und einem Druck von 0 bis 150 bar und
c) Behandlung des unter b) erhaltenen Reaktionsgemisches zur zumindest teilweisen Abtrennung der im Reaktionsgemisch vorhandenen Verbindungen von den Titandioxidpartikeln
aufweist.

8. Verfahren gemäß Anspruch 7,
**dadurch gekennzeichnet,**
**dass** die hydrolisierbare Titanverbindung zumindest eine Verbindung der Formel TiXₘY₄₋ₘ ist, mit X = C1, Br oder J und Y = OR mit R = substituierter oder unsubstituierter, linearer oder verzweigter Kohlenwasserstoff mit 1 bis 9 C-Atomen und m = 0, 1, 2, 3 oder 4.

9. Verfahren gemäß Anspruch 7 oder 8,
**dadurch gekennzeichnet**,
die hydrolisierbare Titanverbindung ausgewählt ist aus Titanchlorid, Titanisopropylat, Titantetraethoxylat und Titantetrapropylat.

10. Verfahren gemäß einem der Ansprüche 7 bis 9,
**dadurch gekennzeichnet,**
**dass** die Umwandlung in Teilschritt b) in Gegenwart eines sauren Katalysators erfolgt.

11. Verfahren gemäß einem der Ansprüche 7 bis 10,
**dadurch gekennzeichnet,**
**dass** Titandioxidpartikel gemäß zumindest einem der Ansprüche 1 bis 6 hergestellt werden.

12. Verfahren gemäß einem der Ansprüche 7 bis 11,
**dadurch gekennzeichnet,**
**dass** die Hydrolyse in Gegenwart eines Alkohols, der von 2 bis 9 Kohlenstoffatome aufweist, durchgeführt wird.

13. Verfahren gemäß zumindest einem der Ansprüche 7 bis 12,
**dadurch gekennzeichnet,**
**dass** zur Hydrolyse ein Gemisch, welches Wasser, einen 2 bis 9 Kohlenstoffatome aufweisenden Alkohol und ein unpolares Dispersionsmittel aufweist, eingesetzt wird.

14. Verfahren gemäß Anspruch 12 oder 13,
**dadurch gekennzeichnet,**
**dass** die Hydrolyse in Gegenwart von Ethanol, 1-Propanol, 2-Propanol, 1-Butanol, 2-Butanol, 1-Pentanol, 2-Pentanol 3-Pentanol, 2-Ethylhexanol, Isononanol und/oder tert.-Butanol durchgeführt wird.

15. Verfahren gemäß zumindest einem der Ansprüche 7 bis 14
**dadurch gekennzeichnet,**
**dass** die hydrolisierbare Titanverbindung vor Beginn der Hydrolyse in einem unpolaren Dispersionsmittel vorgelegt wird.

16. Verfahren gemäß zumindest einem der Ansprüche 7 bis 15,
**dadurch gekennzeichnet,**
**dass** als unpolares Dispersionsmittel eine oder mehrere aliphatische, aromatische und/oder cycloaliphatische Verbindungen, ausgewählt aus einer oder mehrerer der folgenden Gruppen
I) aliphatische verzweigte und oder unverzeigte Kohlenwasserstoffe CₙH₂ₙ₊₂ mit n > 4,
II) cycloaliphatische verzweigte oder unverzeigte Kohlenwasserstoffe CₙH₂ₙ mit n > 5,
III) aromatische Kohlenwasserstoffe CₙHₙ mit n > 6, mit oder ohne Halogen- und/oder Alkylsubstituenten,
oder Gemische dieser Verbindungen eingesetzt werden.

17. Verfahren nach zumindest einem der Ansprüche 7 bis 16,
**dadurch gekennzeichnet,**
**dass** als unpolares Dispersionsmittel ein Verbindung eingesetzt wird, die polymerisiert werden kann.

18. Verfahren nach zumindest einem der Ansprüche 7 bis 17,
**dadurch gekennzeichnet,**
**dass** die Umwandlung in Teilschritt b) in Gegenwart eines sauren Katalysators erfolgt und als saurer Katalysator Salzsäure oder eine organische Säure, ausgewählt aus Ameisensäure, Essigsäure, Propionsäure, Hydroxybenzoesäure, Laurinsäure und Zitronensäure eingesetzt wird.

19. Verfahren nach zumindest einem der Ansprüche 7 bis 18,
**dadurch gekennzeichnet,**
**dass** der Teilschritt b) in einem Temperaturbereich von 5 bis 200 °C und bei einem Druck von 1 bis 100 bar durchgeführt wird.

20. Verfahren nach zumindest einem der Ansprüche 7 bis 19,
**dadurch gekennzeichnet,**
**dass** der Teilschritt c) eine thermische Behandlung der Reaktionsmischung umfasst, bei welcher flüchtige Teile der Reaktionsmischung abdestilliert werden.

21. Verwendung von Titandioxid gemäß zumindest einem der Ansprüche 1 bis 6 als Bestandteil in Beschichtungsmitteln, Solarzellen, Batterien, Lebensmitteln, Kosmetika, Pharmazeutika.

22. Solarzellen,
**dadurch gekennzeichnet,**
**dass** sie Titandioxidpartikel gemäß zumindest einem der Ansprüche 1 bis 6 aufweisen.

23. Beschichtungsmittel,
**dadurch gekennzeichnet,**
**dass** sie Titandioxidpartikel gemäß zumindest einem der Ansprüche 1 bis 6 aufweisen.
